# EUROPEAN PATENT APPLICATION

(11) **EP 4 641 319 A1**
(43) Date of publication of application: **29.10.2025**
(21) Application number: 24171709.9
(22) Date of filing: 22.04.2024
(51) Int. Cl.: G05B 13/02

(54) **METHOD AND APPARATUS FOR CONTROLLING A MEAT PROCESSING LINE**

(71) Applicant: Marel Iceland EHF, 210 Gardabaer (IS)
(72) Inventor: THORVALDSSON, Bjorn, Gardabaer (IS); JANSSENS, Cornelis Hendrikus Petrus Maria, Gardabaer (IS)
(74) Representative: Algemeen Octrooi- en Merkenbureau B.V.

(57) **Abstract**

There is provided in a first aspect of the present disclosure a computer-implemented method of controlling a meat processing line, such as a meat processing line in a slaughterhouse, transporting a plurality of meat elements to be processed by means of a conveyor. The method comprises the following steps: for each meat element of the plurality of meat elements to be processed, obtaining at least one data element relating to said meat element; based on the at least one obtained data element and based on at least one mapping function adapted for mapping data elements to outcome predictions, predicting at least one meat processing outcome; based on the at least one predicted meat processing outcome, determining instructions for processing said meat element; processing the meat element according to the instructions for processing said meat element, resulting in one or more processed meat elements; measuring at least one physical property of at least one element of the one or more processed meat elements, wherein the at least one physical property relates to the at least one mapping function; and updating the at least one mapping function, based on the measured at least one physical property.

## Description

### TECHNICAL FIELD

The present disclosure generally relates to meat processing lines. Particular embodiments relate to a computer-implemented method of controlling a meat processing line and to a corresponding computer program, data processing apparatus, and computer-readable storage medium.

### BACKGROUND

In the domain of controlling meat processing lines, several established methodologies have influenced the operational efficiency and automation of this critical industry. Processes have long been controlled through controllers, such as programmable logic controllers (PLCs), and their integration with software-centric solutions.

This can involve the utilization of controllers to govern sequential processes in a meat processing line. These controllers can serve as a centralized control mechanism, overseeing the systematic flow of raw materials, and regulation of machinery such as conveyors, cutters, and packaging systems. The logical programming of these controllers enables seamless coordination of various tasks and optimizes the overall throughput of the processing line.

The integration of software-driven systems, particularly in the form of advanced control algorithms, is relevant for enhancing the precision and adaptability of meat processing operations. Algorithmic logic is employed to dynamically adjust processing parameters based on real-time data inputs, ensuring optimal performance in the face of varying production conditions. This level of adaptability contributes to the scalability and efficiency of the disclosed meat processing line control system.

Furthermore, computer vision technology has been advantageously introduced in this field. Advanced imaging systems, driven by sophisticated software algorithms, enable the real-time inspection and analysis of meat products. These systems, through logical decision-making processes, identify defects, ensure accurate portioning, and uphold stringent quality control standards.

The integration of software-based solutions to regulate and optimize meat processing lines has been a point of development. This encompasses not only the controllers' logical programming but also extends to adaptive control algorithms and computer vision systems. The logical organization of these software components ensures a harmonized and efficient workflow, aligning with the stringent demands of the meat processing industry (e.g. w.r.t. hygiene, animal welfare, food safety and food quality).

Through the integration of sophisticated control algorithms and computer vision, this point of development has aimed to enhance operational precision, adaptability, and overall efficiency.

### SUMMARY

Nevertheless, it has remained a common problem that information which can be gleaned from the meat processing line is not optimally utilized. It is an insight of the inventors to obtain relevant information and use it not only for locally controlling the line, but also for a goal of dynamically improving operation of the line in a manner that takes into account the output of the line, and for a goal of dynamically improving various peripheral aspects.

In the meat processing industry, various technologies have long been used without benefitting from the above potential for dynamic improvement. A prime example of such a technology is the mapping functions that are commonly used in the meat processing industry to map (i.e. predict) from, say, one or more carcasses, to final cuts (which is typically used to estimate revenue for the carcass or carcasses), usually on the basis of measured or imputed physical properties of the carcasses. There is a need to further improve of these mapping functions as this can improve the yield, i.e. less waste, more high value cuts, optimized raw material usage, optimized order fulfillment, facilitate sales by predicting the production of surplus meat cuts, etc..

Accordingly, there is provided in a first aspect of the present disclosure a computer-implemented method of controlling a meat processing line, such as a meat processing line in a slaughterhouse, transporting a plurality of meat elements to be processed by means of a conveyor. The method comprises the following steps:
- for each meat element of the plurality of meat elements to be processed, obtaining at least one data element relating to said meat element;
- based on the at least one obtained data element and based on at least one mapping function adapted for mapping data elements to outcome predictions, predicting at least one meat processing outcome;
- based on the at least one predicted meat processing outcome, determining instructions for processing said meat element;
- processing the meat element according to the instructions for processing said meat element, resulting in one or more processed meat elements;
- measuring at least one physical property of at least one element of the one or more processed meat elements, wherein the at least one physical property relates to the at least one mapping function; and
- updating the at least one mapping function, based on the measured at least one physical property.

By obtaining the data elements which are mapped to outcome predictions via established mapping functions, the output can be predicted and that prediction can be used to optimize instructions for the line to produce a specific output. Interestingly, the inventors have realized that the produced specific output can be measured w.r.t its physical properties and that this measurement can advantageously be used to update the relevant mapping function or mapping functions.

In other words, it is an insight of the inventors to close the feedback loop from the output back to the mapping functions that are used to produce future output. In this manner, the method allows to achieve the set-out goals of dynamically improving operation of the line in a manner that takes into account the output of the line, and also of dynamically improving various peripheral aspects, because improving the mapping functions results in more accurate predictions and thus in better future output.

In this sense, the improvement of future output can be seen as the technical effect of updating the mapping function or mapping functions. The skilled person will of course understand that this technical effect materializes as soon as future output is produced (which can in principle be the very next meat element to be processed - in other words, after updating the at least one mapping function, any meat element, in particular a meat element still to be subjected to any one or more processing steps of the meat processing line, to be processed next in the meat processing line may advantageously benefit from the improvements due to the updated at least one mapping function), and that said technical effect is therefore inherent to the step of updating the mapping function or mapping functions.

In the context of the present disclosure, the term meat may be taken to refer to animal flesh that is to be eaten as food. This can include pork, beef, mutton, veal, poultry, chevon and venison as well as fish and preferably includes pork, beef, mutton veal and poultry, more preferably pork and beef, most preferably pork.

In the context of the present disclosure, the term slaughterhouse may be taken to refer to a slaughterhouse in the limited sense of the word, but also to a meat processing plant that uses carcasses as a starting material, and also to a deboning plant. The skilled person will therefore appreciate that the term slaughterhouse can serve here as a generalized term for a physical location playing a connecting part in the logical chain from animal rearing to animal consumption, and more in particular for a physical location where animals are processed into meat.

In the context of the present disclosure, the term conveyor may be taken to refer to a conveyor in the limited sense of the word, but also to any similar devices, such as a conveying belt, an overhead conveyor, a chute, etc.

In a particular embodiment, the step of determining said instructions takes into account an objective function adapted for optimally processing the plurality of meat elements, for preventing downgrading of meat, and/or for mitigating waste of meat.

Advantageously, by taking into account the thus-adapted objective function, meat waste and meat downgrading can be reduced or even prevented.

In this context, the term mitigating may be taken to refer to such terms such as limiting, reducing, decreasing, preventing, avoiding.

Additionally or alternatively, the objective function may be aimed at reducing the need for skilled labor, and/or at improving resilience against human errors, and/or at further improving food safety.

In a particular embodiment, the method comprises: generating a visualization of said instructions; and displaying at least part of said visualization of said instructions on a visual display arranged at the meat processing line.

Advantageously, providing the visualization on such a visual display handily allows operators of the meat processing line to bring into effect (the relevant part of) the instructions.

In the context of the present disclosure, the term `at' may be taken to mean `at, on, in or near', so long as the meaning encapsulates the proximity between the visual display and the rest of the meat processing line.

In a particular embodiment, the method comprises obtaining a demand for a particular plurality of meat processing outcomes; and the step of determining said instructions comprises: performing an optimization procedure adapted for optimizing output of the meat processing line, based on the demand for the particular plurality of meat processing outcomes and based on the at least one predicted meat processing outcome.

Advantageously, this affords a type of feedforward control of the meat processing line, because the output can be more optimally adapted as a function of the demand.

In this context, note that the terms 'optimal' and 'optimization' etc. do not refer to a perfect solution, but are rather to be interpreted by the skilled person in the sense commonly given in the field of optimization theory, namely as a way of searching and improving a potential solution to evermore better (i.e. optimized) solutions.

In a particular embodiment, the optimization procedure comprises: predicting a potential plurality of meat processing outcomes, based on the at least one obtained data element; and matching the predicted potential plurality of food processing outcomes with the demand for a particular plurality of food processing outcomes.

Advantageously, this affords a type of feedforward control of the meat processing line, because the output can be more optimally adapted as a function of the demand, in particular because good matches between potentials and desires can be sought.

In the context of the present disclosure, the term matching may be taken to refer to a process of associating elements with each other in the best manner possible according to a constraint or some constraints.

In a particular embodiment, the optimization procedure comprises: comparing the at least one obtained data element with at least one predefined constraint; and, based on the step of said comparing, determining a predefined processing program to be followed by the meat processing line for said meat element.

Advantageously, this affords a type of feedforward control of the meat processing line, because the output can be more optimally adapted as a function of the demand, in particular because suitable ready-made (and thus very speedily activated) processing programs can be chosen, which may to further advantage already have been evaluated to meet various requirements of the processing, and which may advantageously be very easy for operating and managing personnel to take into account.

In a particular embodiment, the optimization procedure comprises: calculating an optimized processing scheme, in particular an optimized cutting scheme, such that the optimized processing scheme is adapted to optimally generate the particular plurality of food processing outcomes from the predicted potential plurality of food processing outcomes; and determining processing instructions corresponding with the calculated processing scheme. Additionally or alternatively, the optimization procedure comprises: classifying the plurality of meat elements into at least two categories, based on the at least one obtained data element for each meat element; and determining rearranging instructions for the plurality of meat elements on the conveyor, in order to group meat elements with identical, equivalent, or associated classifications.

It will be appreciated by the skilled person that the above-discussed approach of predicting a potential plurality of meat processing outcomes and matching them with the demand, and the above-discussed approach of comparing the data elements with a constraint in order to select a predefined processing program, and the presently-discussed approach of optimizing the cutting scheme, all form preferred but nonlimiting examples of the optimization procedure, and that various more finely-developed implementations for the optimization procedure may be developed by the skilled person on the basis of these approaches.

In this context, the expression grouping meat elements may be taken to refer to a process of clustering, or bundling, or arranging them together.

In a particular embodiment, the method comprises: storing the at least one data element in a central digital database, such that the at least one data element is digitally coupled with said meat element; and storing the at least one data element on a physically readable data medium arranged at said meat element, such that the at least one data element is physically coupled with said meat element; and continuously synchronizing the at least one data element across both the central digital database and the physically readable data storage medium.

Advantageously, this synchronizing of both a digital coupling and a physical coupling between data element and meat element provides a high degree of transparency and provability to the entire meat processing line, all the while allowing efficient processing (because the digital coupling is readily available for computational processing, and because the physical (e.g. visual) coupling is easily inspectable and verifiable for human operators and/or for legacy computer vision-based systems.

In a particular embodiment, the method comprises: predicting a quality and/or type of product for at least one meat element of the plurality of meat elements, based on the at least one obtained data element for said at least one meat element; and transmitting the predicted quality and/or type of product to a potential or actual customer demanding said at least one meat element.

In this manner, the method allows to notify a customer ahead of time of various aspects relating to the product quality and/or type of meat that the customer may wish to procure. This concept relates (from a certain point of view) to the combination of hygiene, ethics, and additional quality of service parameters. However, in the context of the present disclosure, any quality indication can be included, and this does not have to be limited to these conventional hygiene and ethics parameters (although, of course, these are preferably important parameters for the quality of product).

In a particular embodiment, the method comprises: predicting a supply requirement, based on the at least one obtained data element for said at least one meat element and based on the demand for the particular plurality of food processing outcomes, wherein the supply requirement is configured for minimizing at least one of: a required number of animals or carcasses; a required number of carcass parts; a required type of supply of animals or carcasses; a required type of carcass parts; and/or transmitting the supply requirement to at least one distributor tasked with supplying animals, carcasses or carcass parts.

Advantageously, by minimizing one or more of the cited required elements, waste may be reduced, by avoiding mismatches.

In a particular embodiment, the method comprises: determining a breeding feedback indication (e.g. pertaining to a quality and/or a yield of one or more animals stemming from one or more breeding companies), based on the at least one obtained data element for said at least one meat element and optionally based on the demand for the particular plurality of food processing outcomes, in order to improve at least one genetic parameter of animals to be supplied in future; and transmitting the breeding feedback indication to at least one breeding company tasked with supplying animals.

Advantageously, this affords a type of feedback control extending even earlier back than the meat processing line itself, namely by providing the feedback to breeding companies, for them to take into account when breeding and rearing future animals.

In a particular embodiment, the at least one data element comprises at least one of the following data elements: a mass of said meat element; meat color; at least one geometric dimension of said meat element; an absolute or relative fat content of said meat element; a ratio of fat to lean of said meat element; fat color; marbling score; a fat depth; a provenance remark indicating an origin of said meat element; a veterinary remark indicating a health status or quality of said meat element; a biological age of the animal that supplied said meat element; a processing age of said meat element indicating how long said meat element has been in processing in said meat processing line; an estimated remaining shelf-life of said meat element; a sex of the animal that supplied said meat element; a breed of the animal that supplied said meat element; a type of breeding program of the animal that supplied said meat element; and an area of origin of the animal that supplied said meat element.

Additionally, there is provided in a second aspect of the present disclosure a computer program comprising instructions which, when the program is executed by a computer, cause the computer to carry out the method of any one of the above-described embodiments.

The skilled person will appreciate that the above-described considerations and advantages applicable to embodiments of the method may also be applicable to embodiments of the computer program, *mutatis mutandis.*

Additionally, there is provided in a third aspect of the present disclosure a data processing apparatus comprising means for carrying out the method of any one of the above-described embodiments.

The skilled person will appreciate that the above-described considerations and advantages applicable to embodiments of the method may also be applicable to embodiments of the data processing apparatus, *mutatis mutandis.*

The data processing apparatus may comprise at least one processor and at least one memory, wherein the memory stores computer program instructions which, when the program is executed by the processor of the data processing apparatus, cause the data processing apparatus to carry out the method of any one of the above-described embodiments. The data processing apparatus may be a computer apparatus implemented as a local control system of the meat processing line, in particular in the form of a controller, such as a PLC, but alternatively as a general-purpose computer system. The data processing apparatus may be centralized or distributed. It will be understood by the skilled person that, in principle, the data processing apparatus can be physically located anywhere, even remotely from the actual physical meat processing line, as long as it is communicatively and operatively connected to allow exchange of data and instructions - however, it will also be appreciated that the preferred option is to locate the data processing apparatus in close proximity to the meat processing line, most preferably integrally with any logical controllers of the meat processing line that are already included for the line's general operations.

Additionally, there is provided in a fourth aspect of the present disclosure a computer-readable storage medium comprising instructions which, when executed by a computer, cause the computer to carry out the method of any one of the above-described embodiments.

The skilled person will appreciate that the above-described considerations and advantages applicable to embodiments of the method may also be applicable to embodiments of the computer-readable storage medium, *mutatis mutandis.*

Examples of such a storage medium may include, but are not limited to, mountable physical devices such as the hard drive of a control computer, or baked-in physical devices such as the firmware instructions of a dedicated control device.

The embodiments described herein are provided for illustrative purposes and should not be construed as limiting the scope of the invention. It is to be understood that the invention encompasses other embodiments and variations that are within the scope of the appended claims. The invention is not restricted to the specific configurations, arrangements, and features described herein. The invention has wide applicability and should not be limited to the specific examples provided. The embodiments disclosed are merely exemplary, and the skilled person will appreciate that various modifications and alternative designs can be made without departing from the scope of the invention.

### BRIEF DESCRIPTION OF THE DRAWINGS

In the following description, a number of exemplary embodiments will be described in more detail, to help understanding, with reference to the appended drawings, in which:
Figure 1 schematically illustrates a first embodiment of the method according to the present disclosure;
Figure 2 schematically illustrates a second embodiment of the method according to the present disclosure;
Figure 3 schematically illustrates a first example of a meat processing line to be controlled by an embodiment of the method according to the present disclosure; and
Figure 4 schematically illustrates a second example of a meat processing line to be controlled by an embodiment of the method according to the present disclosure.

### DETAILED DESCRIPTION

It has conventionally been a challenge in food processing lines to match input with output, in the sense that incoming food (in particular meat) needs to be processed in a manner that is congruent with desired (including expected or required) output. This is especially (but not uniquely) the case with animal processing, in particular beef and pork processing, as there is a vast number of potential SKUs (Stock Keeping Units) that can be derived from the animals (in some cases up to 2,500 SKUs, although this may be even higher in other cases).

Given the general desire to keep the food processing line ongoing or to at least limit downtime as much as possible (said desire is also known as the concept of 'flow'), it is desirable to ensure that the food processing line is dynamically improved where possible.

A specific desire for a meat processing line, as opposed to a vegetable processing line, is that the final product should be delivered as soon as possible when it is ready, in view of requirements of freshness, which are more stringent with animal derived products than with (broadly-speaking) vegetable type of products.

As discussed above in the summary section of the present disclosure, by obtaining the data elements which are mapped to outcome predictions via established mapping functions, the output can be predicted, that prediction can be used to optimize instructions for the line to produce a specific output, the produced specific output can be measured w.r.t its physical properties and this measurement can advantageously be used to update the relevant mapping function or mapping functions.

As stated above, this allows to close the feedback loop from the output back to the mapping functions that are used to produce future output, and thus allows to achieve the set-out goals of dynamically improving operation of the line in a manner that takes into account the output of the line, and also of dynamically improving various peripheral aspects, because improving the mapping functions results in more accurate predictions and thus in better future output.

In this manner, a type of feedforward control can be introduced in the food processing line, in the sense that yield can be optimized, which improves predictability of the match between output of the food processing line and demand of the customer, which is beneficial to the involved parties.

It is thus also an advantage provided by at least some embodiments according to the present disclosure to better predict output from an early stage (preferably at or even before the cooling stage - see below, ideally from as early as the warm butchered stage or even a stage wherein the animals are still alive).

In a further-developed embodiment, the method may comprise: determining a breeding feedback indication (e.g. pertaining to a quality and/or a yield of one or more animals stemming from one or more breeding companies), based on the at least one obtained data element for said at least one meat element and optionally based on the demand for the particular plurality of food processing outcomes, in order to improve at least one genetic parameter of animals to be supplied in future; and transmitting the breeding feedback indication to at least one breeding company tasked with supplying animals. This allows to introduce a type of feedback control in the meat processing line, in the sense that suppliers (e.g. pig rearing companies or so-called 'genetics' companies) can be notified of desired improvements that might be relevant to their activities (e.g. to ensure a better fat distribution across animals). This in turn may improve the overall yield of the process, but also the quality, the payment, and the risk safety, and it may also improve (i.e. decrease) recall.

Moreover, by combining these two control aspects (viz. the feedforward control and the feedback control) it becomes possible to introduce a type of overall feedback control, wherein feedback signals from customers (including e.g. end-consumers, supermarkets, specialist stores, etc.) can be used to guide the original suppliers (e.g. rearing companies or so-called 'genetics' companies) to improve the supply of their product.

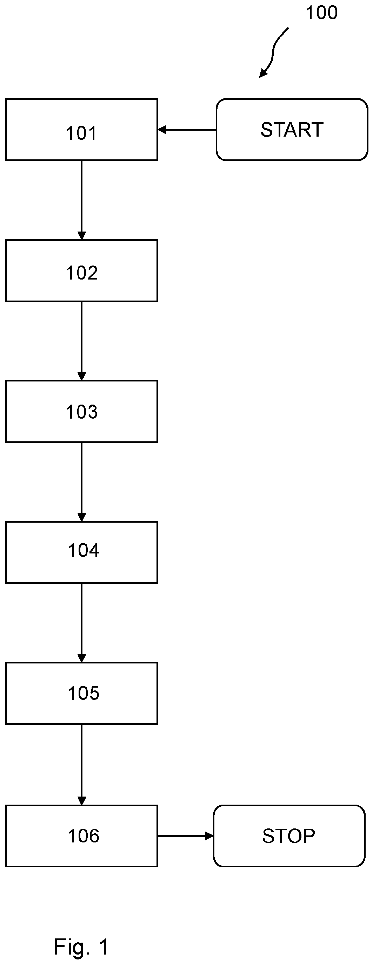

Figure 1 schematically illustrates a first embodiment 100 of the method according to the present disclosure. The method 100 is suitable for controlling a meat processing line, such as a meat processing line in a slaughterhouse, transporting a plurality of meat elements to be processed by means of a conveyor.

The method embodiment 100 as shown in this exemplary figure comprises the following steps:
- for each meat element of the plurality of meat elements to be processed, obtaining 101 at least one data element relating to said meat element;
- based on the at least one obtained data element and based on at least one mapping function adapted for mapping data elements to outcome predictions, predicting 102 at least one meat processing outcome;
- based on the at least one predicted meat processing outcome, determining 103 instructions 118 for processing said meat element;
- processing 104 the meat element according to the instructions 118 for processing said meat element, resulting in one or more processed meat elements 119;
- measuring 105 at least one physical property 120 of at least one element of the one or more processed meat elements 119, wherein the at least one physical property relates to the at least one mapping function 115; and
- updating 106 the at least one mapping function 115, based on the measured at least one physical property 120.

The skilled person will understand that the method embodiment 100 as shown in this exemplary figure may be further developed and adapted according to any one or more of the further enhancements described in the present disclosure, and that, wherever not excluded by reasonable engineering, one or more features and improvements from particular embodiments may be combined with one or more features from other embodiments described herein.

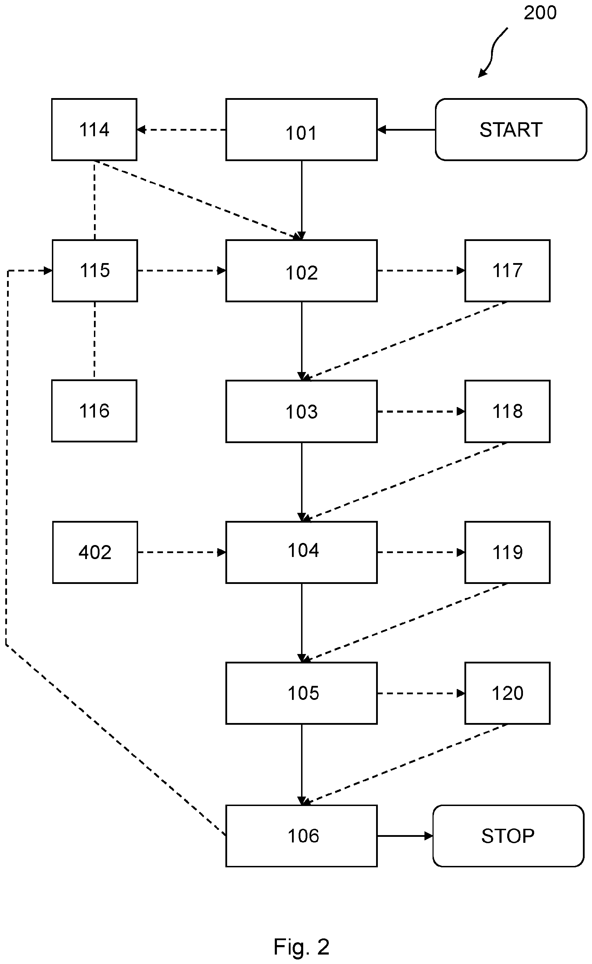

Figure 2 schematically illustrates a second embodiment 200 of the method according to the present disclosure, which represents an exemplary further specification of first embodiment 100 of Figure 1.

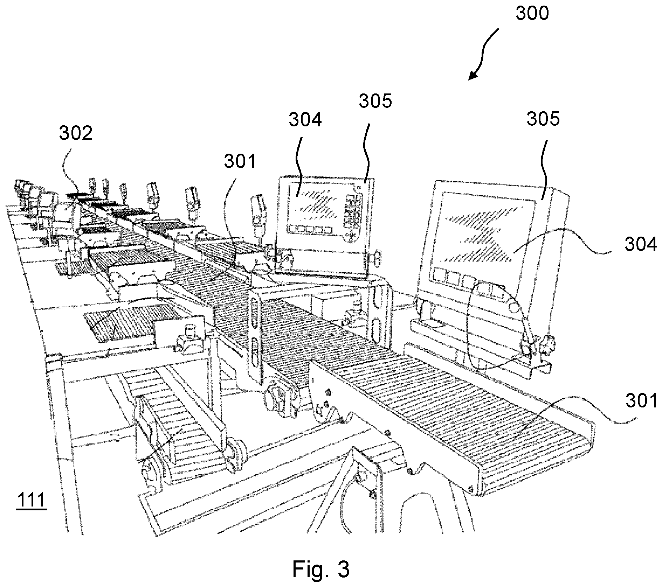

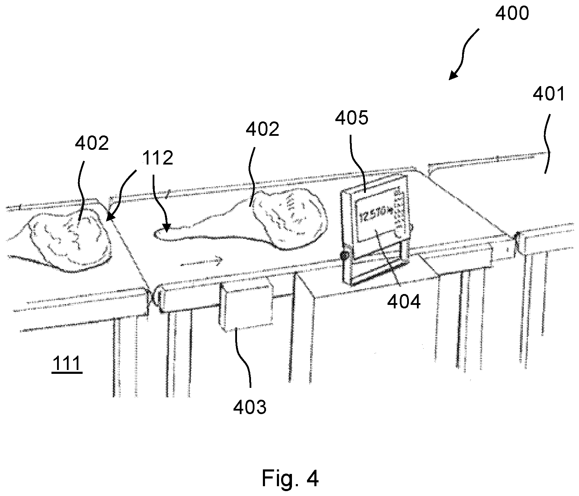

The method embodiment 200 illustrated here is suitable for controlling a meat processing line 110, such as a meat processing line in a slaughterhouse 111 (indicated in Figures 3 and 4), transporting a plurality of meat elements 112 (indicated in Figure 4) to be processed by means of a conveyor 301, 401 (indicated in Figures 3 and 4).

The method embodiment 200 illustrated here comprises the following steps:
- for each meat element 402 (indicated in Figure 4) of the plurality of meat elements 112 to be processed, obtaining 101 at least one data element 114 relating to said meat element 402;
- based on the at least one obtained data element 114 and based on at least one mapping function 115 adapted for mapping data elements 114 to outcome predictions 116, predicting 102 at least one meat processing outcome 117;
- based on the at least one predicted meat processing outcome 117, determining 103 instructions 118 for processing said meat element;
- processing 104 the meat element 402 according to the instructions 118 for processing said meat element, resulting in one or more processed meat elements 119;
- measuring 105 at least one physical property 120 of at least one element of the one or more processed meat elements 119, wherein the at least one physical property relates to the at least one mapping function 115; and
- updating 106 the at least one mapping function 115, based on the measured at least one physical property 120.

Figure 3 schematically illustrates a first example of a meat processing line 300 to be controlled by an embodiment of the method according to the present disclosure, for example by method embodiment 100.

The figure further shows that the environment is a slaughterhouse 111 (which encompasses the presently-shown meat processing line 300). It will be understood that the term slaughterhouse is not to be interpreted overly limiting in this context, as has already been explained hereinabove.

The figure further shows that the meat processing line 300 has a conveyor 301, on which a plurality of meat elements (not shown in this figure) may be transported in order to be processed.

The figure also shows operator screen 302, which may for example be used to display information and/or instructions to operators.

The figure also shows a number of visual displays 305, one or more of which (in this case each) is displaying a visualization 304 of (at least part of) the instructions as determined by the controlling method embodiment (for example method embodiment 100). In some embodiments, the visualizations 304 shown on different visual displays 305 may differ, e.g. depending on the specific station (i.e. part of the line) where they are arranged, and/or e.g. depending on the specific needs and/or wishes of an individual operator or a group of operators at that station. In other embodiments, the visualizations 304 may be shared (i.e. identical) over multiple visual displays 305, potentially even over all of the visual displays 305, for example in case of a strongly parallelized line.

Figure 4 schematically illustrates a second example of a meat processing line 400 to be controlled by an embodiment of the method according to the present disclosure, for example by method embodiment 100.

Just as for Figure 3, Figure 4 further shows that the environment is a slaughterhouse 111 (which encompasses the presently-shown meat processing line 400).

The figure further shows that the meat processing line 400 has a conveyor 401, on which a plurality of meat elements 112 may be transported in order to be processed. In this figure, the reference 112 indicates the overall plurality of meat elements (that is, many or all meat elements as considered together), while the reference 402 indicates individual meat elements of that plurality of meat elements 112.

The figure further shows sensor 403 which may for example be suitable for obtaining (i.e. reading out) the data elements described above. Examples of such a sensor may include a weight sensor, a count sensor, etc.

The figure also shows a visual display 405, which is displaying a visualization 304 of (at least part of) the instructions as determined by the controlling method embodiment (for example method embodiment 100).

As discussed above, in a particular embodiment, the method may comprise: storing the at least one data element in a central digital database, such that the at least one data element is digitally coupled with said meat element; and storing the at least one data element on a physically readable data medium arranged at said meat element, such that the at least one data element is physically coupled with said meat element; and continuously synchronizing the at least one data element across both the central digital database and the physically readable data storage medium.

This is suitable for cooperating with a 'hybrid' tracking system, comprising a digital tracking system and a physical tracking system.

The digital tracking system may be configured for associating a digital tracking ID for individual elements with said individual elements or for a group of elements with said group of elements. The digital tracking ID may comprise a unique identifier, and may optionally additionally comprise metadata describing the individual element or the group of elements.

The physical tracking system may comprise attaching a physical identifier to a meat element (e.g. a section) and/or to a line instrument (e.g. a suspension hook to which meat elements can be attached).

The physical identifier may comprise e.g. a food-safe tracking device, such as a metal or plastic card or a preferably food-grade paper card, or a RFID (Radio Frequency Identifier). The physical identifier may (additionally or alternatively) comprise e.g. a food-safe tag, such as a so-called `slapmark' tattoo or a laser-etched/laser-burned tattoo, wherein the term 'tattoo' is to be interpreted broadly as any type of visual marking arranged in or on the outside of a meat element to allow visual inspection and recognition, and not only as a needled skin pigmentation.

The digital tracking system and the physical tracking system may be operatively interconnected in such a manner that elements tracked individually via one system are simultaneously and equivalently also tracked via the other system. This provides a double benefit, namely that the tracking can be very flexible because of the digital tracking (in the sense that a lightweight, adaptable and easily transferable type tracking can be used), but still very robust because of the physical tracking, in the sense that a digital tracking system fault does not impair safety or traceability of the food.

In a food processing line, particularly in the context of slaughtering and processing of animals, digital information streams may be generated, for ensuring quality control, safety standards, and operational efficiency. These streams may be generated, collected, and utilized at various phases or stages of the overall process.

In general, the meat processing line may comprise a plurality of stages, including one or more of, but not limited to: a butchery stage; a cooling stage; a cutting stage; a deboning stage; a trimming stage; a processing stage; and a packaging stage. It is noted that certain stages may comprise all or part of certain other stages. Other definitions of the stages may be used, including stages for: live animal handling, stunning, sticking, blood collection, scalding, evisceration, carcass splitting, deboning, trimming, meat preparation, portioning, value adding, further processing, packing, and labelling. The skilled person will understand that these specific stages are not meant to be limiting for the essential characteristics of the present disclosure.

For example, during the butchering or slaughtering phase, digital streams may be generated via a variety of means, such as loT sensors, RFID tags, and/or barcode systems. These means can collect animal-specific information, such as weight, health history, and origin details, which may be documented and digitally recorded upon arrival at the food processing facility. In most cases, this animal-specific information can be collected at entry gates, where the animals are identified and sorted. The aforementioned digital streams of the slaughtering phase may advantageously improve traceability, quality assurance, and compliance with regulatory standards.

As another example, during butchering and further meat processing steps, data may be captured from various machinery and equipment. These data may include details on sections (e.g. where cuts have been made), weight measurements, and imaging data, e.g. for quality inspection. These data may be collected at stations where the processing takes place, such as the cutting station, the deboning station, and the trimming station. These data may advantageously be used for yield management, quality control, and to ensure adherence to specific production standards.

Another exemplary source of digital information streams relates to quality and safety control, where digital information streams are created through the use of sensors and cameras, in particular for quality and safety inspections. The quality and safety inspections may for example include checks for contamination, foreign objects, and temperature monitoring to ensure food safety. These checks may take place at various points in the food processing line, such as before packaging and at final inspection stages. Advantageously, acquiring these digital information streams in relation to quality and safety control may help to improve compliance with food safety regulations and to maintain high product quality.

A further example of where data can be generated and collected, is the packaging and labelling phase. During the packaging phase, data can be collected regarding batch numbers, expiration dates, and packaging materials used. Of course, these data can be obtained at packaging and labelling stations where the final products are sealed and labeled. Advantageously, these data can be utilized not only for customer and consumer information, but also for inventory management, supply chain traceability.

Yet another example of how information can be used within the context of the present disclosure, is regulatory compliance. The information collected in the above examples may for instance be used advantageously for regulatory reporting purposes, and for ensuring compliance with industry standards and governmental regulations.

Another example may be obtaining imaging data for the purposes of early notification to a customer, e.g. showing to a customer and/or to an end-consumer an image of the section ahead of delivery, in order to improve the usability of the goods to be delivered.

As an example of how more than one of the above may be combined, imaging data obtained of a particular section may be used not only for ensuring regulatory compliance in the present, but also for facilitating forensic proof in the future, and moreover also for early notification to a customer.

It is noted that a central database or a so-called Manufacturing Execution System (MES) may be used to aggregate and manage the aforementioned types of data and information. Advantageously, such an approach to data integration and management, wherein data from various stages is centralized and used within the MES, may allow for real-time monitoring, historical analysis, and traceability in case of recalls or quality concerns.

We will now proceed to a more detailed description of various elements of the above-described embodiments, to further improve understanding.

It is a general aim for controlling meat processing lines to provide a more fully integrated control of disassembly processes to manage yields, throughput, traceability and optimize added value of the input material via various improvements. Examples of such improvements may include (but are not limited to):
- Retrieve the right carcasses or other input products from the chillers (sorting group/amount);
- Assign the right production runs/instructions to the processing lines/stations;
- Secure traceability from the input batch/sorting groups up to the final product packs and sales orders;
- Manage complex end-customer requirements based on product properties such as quality, breed, etc.;
- Support optimal valorization of input products and manage downgrade options;
- Manage mass balance and yields up to the level of sorting groups and production runs;
- Fully integrated with other modules to be able to manage the complete process;
- Assign the right cut plans to the right processes/lines/stations;
- Optimize the cutting/deboning/trimming processes by presenting the right info to operators;
- Support change-overs between cuts and batches by minimizing change-over times and preventing mistakes;
- Monitor progress and indicate deviations to prepare actions to prevent potential losses;
- Secure traceability throughout the complete process;
- Optimize the packing process by making it convenient for the operators (presenting limited but the right info, user friendly UI's, pictures/graphs etc.);
- Provide management information about the main KPI's: mass balance, yield, throughput, order/production fulfilment;
- Prevent unnecessary downgrading, facilitate downgrading process where needed; and
- Integration with other modules to provide fully integrated solution.

The terminology in this description is based on pork processing, but the same principle applies to beef, veal, lamb processing, etc. In a red meat processing plant a common method of processing may comprise the following steps:
- Obtain carcasses from a slaughtering stage;
- Store carcasses in chiller for a period of time, usually at least overnight;
- Break up carcasses into intermediate products (cutting and deboning);
- Optionally trim the intermediate products; and
- Pack and label intermediate or trimmed products as final products.

There may be intermediate steps, such as storing legs on hooks in a chiller after breakup to facilitate leg processing. To simplify the discussion below, the term section may be used to specify any portion of a carcass (whole carcass, half carcass, etc.).

Sections and section parts in chillers (e.g. section chiller, legs chiller, ...) may be sorted onto rails based on various parameters such as age, gender, breed (Gloucester, Hampshire, etc.), breeding program (organic, outdoors bred, etc.) and physical characteristics (weight, fat depth, etc.). This may be referred to as assigning a sorting group and rail to a section. Sections may stay in the chiller over a period of time, usually at least overnight. Each rail may be a FIFO but it may be possible to re-sort the sections to some extent before production starts.

Sorting groups may be designed to sort the sections in such a way that they can be optimally processed taking into account end-product requirements. Animals may have different purchase prices, based on contracts and animal properties. End-products may have different values, based on market prices or sales contracts. End-products may have requirements towards both the animals (i.e. requires organic meat) and to the way the meat is prepared in production (i.e. type of cut, level of trimming etc.).

It is a general challenge that the planning process is multi-dimensional, for the following reasons. Once animals have been purchased all the meat needs to be processed and sold. If there are contractual obligations to deliver certain products there must be animals available that fit those products. The mapping of animal types to end products is typically getting more complex as customer requirements get more specific. High value animals are ideally used for high value products. If there are no orders for such products for the entire carcass, then individual cuts may be used for lower value products (this process is known as downgrading). Shipping times may also need to be taken into account.

Managing the planning process in the right way of course may be a big impact on profitability. It is difficult and error prone to do by hand, it may form a limiting factor in improving operations and it may require highly skilled and experienced personnel. If done incorrectly, it may result in unnecessary downgrading or not fulfilling customer requirements.

In order to improve this process, various embodiments as described above may be used fruitfully. Below, particular approaches and insights will be described, which may apply to various of the above-described embodiments.

Various embodiments may help in managing production:
Sections may be removed from chillers and sent to production in groups called "section lots". A section lot defines: a list of one or more sorting groups, in order of preference, that can be taken out of chillers; a number of sections; and optionally one or more arbitrary properties that can be used in end-product mapping (see below). For each relevant downstream process it may be defined how to process the section lot. For example a cutting pattern can be used to instruct operators how to cut the meat, or it may select a program on a machine. A section lot may be broken down at each downstream process so that, for example, half the sections are processed using one cutting pattern and the rest using another cutting pattern. Each such processing instance may be called a process lot. The section lot and the process lots may form a tree of lots that cover all the relevant processes, securing traceability. All output from the process may be related to a process lot, which may be related to a section lot, which may be related to a set of sorting groups. UI's may be provided to manage the planning of section lots and process lots, to record input and output from each process, to monitor progress at each process, and to present cutting/processing/packing instructions to operators.

Various embodiments may help in obtaining predicted yields:
A useful element in planning may be to predict what the output from a certain section will be. The variance in yields may be two-dimensional: in a first dimension, it may be based on the properties on each individual animal, whereas in a second dimension, it may be based on how it is processed. A normal approach may be to calculate "standard yields" based on sorting groups and reverse BOMs (cut patterns), which form a type of mapping functions for mapping from data elements to outcome predictions. This means that if a section of a specific sorting group is cut in a specific way, then there will (predictably) be a certain outcome.

This approach may be faced with various problems, e.g. the following two problems:
- Only the sorting group may be taken into account and not the properties of individual sections. When multiple sorting groups are used for a section lot (see definition above) only one sorting group can be used.
- Defining the standard yields, and maintaining them over time, may be a time consuming and inaccurate process. Typically a set of animals may be processed manually in a controlled way, followed by an ad-hoc process of comparing actual outcomes with the predicted ones.

Various above-described embodiments may help in this regard, by improving understanding of what the predicted outcome may be, based on a more complete set of properties of a group of sections. This may preferably take into account any section or animal property (of which there are many) for every individual section, and multiple sorting groups. By thus better learning which sections properties are important to the prediction, this approach may have an impact both on the data collection process prior to the chillers and in communicating results to farmers.

Various embodiments may help in managing relations between sections and end products:
End-product requirements may be becoming ever more complex as the product mix increases, driven by the opportunity to increase margins through delivering the exact product a customer needs. For example a customer may specify an area of origin, a breeding program, remaining shelf-life, weight range etc. Criteria may apply to each individual end-product, with every product potentially having a different set of requirements. This may typically be managed either manually or through configuration of individual workstations or machines, potentially putting limits on what the production can handle in real life. Furthermore, the planning process may be complicated by the complex relationships between sections, their individual cuts, and end products.

By creating a mapping of section lots (see definition below) to end-products and orders for a given processing period, based on arbitrary section lot and end-product and order properties, one can easily understand, given a section lot, which end-products and orders can be produced, without having to know as much about section lot properties or end product/order requirements.

Various embodiments may help in managing downgrades:
Downgrades may occur for various reasons, e.g. for the following two reasons:
- High value carcasses may be used together with lower value carcasses in production, either because they need to be processed or because there are not enough low value carcasses to fulfill high priority orders.
- High value cuts may be used for end-products that only required lower value cuts, which may happen because there are no orders for the higher valued end products.

It is of course preferred to minimize all downgrades. Therefore it should be clear to all operators when a downgrade is taking place, and the processing system needs to provide details on all downgrades that have taken place. To help achieve this goal, the following approaches may be used:
- When a section lot is created, it may be indicated, for each assigned sorting group, whether it is a downgrade or not. This allows the system to report on downgraded sections.
- When section lots are mapped to end-products, it may be indicated whether producing an end-product from a specific section lot constitutes a downgrade or not. This allows the system to indicate to the operator that a downgrade is taking place, to report on downgrades in production , and to control who is authorized to make downgrades.

Various embodiments may help in predicting mass balance, predicting yield and/or production output:
It is preferred to accurately predict which end-products and orders may be produced based on a prioritized set of section lots and a prioritized set of orders. This may allow a prediction of margins achieved, orders fulfilled, downgrades and their cost, and product that still needs to be sold. A planner can examine the predicted outcome and re-organize sections and orders to achieve better margins, or to improve order fulfillment. Furthermore, an optimization procedure can be used to suggest an optimal solution to the planner.

As used in this application and in the claims, the singular forms "a," "an," and "the" include the plural forms unless the context clearly dictates otherwise. The systems, apparatus, and methods described herein should not be construed as limiting in any way. Instead, the present disclosure is directed toward all novel and non-obvious features and aspects of the various disclosed embodiments, alone and in various combinations and sub-combinations with one another. The disclosed systems, methods, and apparatus are not limited to any specific aspect or feature or combinations thereof, nor do the disclosed systems, methods, and apparatus require that any one or more specific advantages be present or problems be solved. Any theories of operation are to facilitate explanation, but the disclosed systems, methods, and apparatus are not limited to such theories of operation.

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed systems, methods, and apparatus can be used in conjunction with other systems, methods, and apparatus. Additionally, the description sometimes uses terms like "obtaining" and "outputting" to describe the disclosed methods. These terms are high-level abstractions of the actual operations that are performed. The actual operations that correspond to these terms will vary depending on the particular implementation and are readily discernible by the skilled person.

It will be appreciated that for simplicity and clarity of illustration, where appropriate, reference numerals may have been repeated among the different figures to indicate corresponding or analogous elements. In addition, numerous specific details are set forth in order to provide a thorough understanding of the examples described herein. However, it will be understood by the skilled person that the examples described herein can be practiced without these specific details. In other instances, methods, procedures and components have not been described in detail so as not to obscure the related relevant feature being described. The drawings are not necessarily to scale and the proportions of certain parts may be exaggerated to better illustrate details and features. The description is not to be considered as limiting the scope of the examples described herein. The skilled person will understand that the present invention may be implemented in other ways than those specifically set forth herein without departing from the essential characteristics of the invention. The embodiments described herein are thus to be considered in all respects as illustrative and not restrictive, and all changes within the scope of the appended claims are intended to be embraced therein.

## Claims

1. A computer-implemented method (100) of controlling a meat processing line (110), such as a meat processing line in a slaughterhouse (111), transporting a plurality of meat elements (112) to be processed by means of a conveyor (301, 401); the method comprising:
- for each meat element (402) of the plurality of meat elements (112) to be processed, obtaining (101) at least one data element (114) relating to said meat element (402);
- based on the at least one obtained data element (114) and based on at least one mapping function (115) adapted for mapping data elements (114) to outcome predictions (116), predicting (102) at least one meat processing outcome (117);
- based on the at least one predicted meat processing outcome (117), determining (103) instructions (118) for processing said meat element (402);
- processing (104) the meat element (402) according to the instructions (118) for processing said meat element, resulting in one or more processed meat elements (119);
- measuring (105) at least one physical property (120) of at least one element of the one or more processed meat elements (119), wherein the at least one physical property relates to the at least one mapping function (115); and
- updating (106) the at least one mapping function (115), based on the measured at least one physical property (120).

2. The method of claim 1, wherein the step of determining said instructions takes into account an objective function adapted for optimally processing the plurality of meat elements, for preventing downgrading of meat, and/or for mitigating waste of meat.

3. The method of any preceding claim, comprising:
- generating a visualization (304, 404) of said instructions; and
- displaying at least part of said visualization (304, 404) of said instructions on a visual display (305, 405) arranged at the meat processing line.

4. The method of any preceding claim, comprising:
- obtaining a demand for a particular plurality of meat processing outcomes; and
wherein the step of determining said instructions comprises:
- performing an optimization procedure adapted for optimizing output of the meat processing line, based on the demand for the particular plurality of meat processing outcomes and based on the at least one predicted meat processing outcome.

5. The method of claim 4, wherein the optimization procedure comprises:
- predicting a potential plurality of meat processing outcomes, based on the at least one obtained data element; and
- matching the predicted potential plurality of food processing outcomes with the demand for a particular plurality of food processing outcomes.

6. The method of any one of claims 4-5, wherein the optimization procedure comprises:
- comparing the at least one obtained data element with at least one predefined constraint; and
- based on the step of said comparing, determining a predefined processing program to be followed by the meat processing line for said meat element.

7. The method of any one of claims 4-5, wherein the optimization procedure comprises:
- calculating an optimized processing scheme, in particular an optimized cutting scheme, such that the optimized processing scheme is adapted to optimally generate the particular plurality of food processing outcomes from the predicted potential plurality of food processing outcomes; and
- determining processing instructions corresponding with the calculated processing scheme; and/or
wherein the optimization procedure comprises:
- classifying the plurality of meat elements into at least two categories, based on the at least one obtained data element for each meat element; and
- determining rearranging instructions for the plurality of meat elements on the conveyor, in order to group meat elements with identical, equivalent, or associated classifications.

8. The method of any preceding claim, comprising:
- storing the at least one data element in a central digital database, such that the at least one data element is digitally coupled with said meat element; and
- storing the at least one data element on a physically readable data medium arranged at said meat element, such that the at least one data element is physically coupled with said meat element; and
- continuously synchronizing the at least one data element across both the central digital database and the physically readable data storage medium.

9. The method of any preceding claim, comprising:
- predicting a quality of product for at least one meat element of the plurality of meat elements, based on the at least one obtained data element for said at least one meat element; and
- transmitting the predicted quality of product to a potential or actual customer demanding said at least one meat element.

10. The method of any preceding claim, comprising:
- predicting a supply requirement, based on the at least one obtained data element for said at least one meat element and based on the demand for the particular plurality of food processing outcomes, wherein the supply requirement is configured for minimizing at least one of: a required number of animals; a required frequency of supply of animals; and a set of required origins of animals; and
- transmitting the supply requirement to at least one distributor tasked with supplying animals.

11. The method of any preceding claim, comprising:
- determining a breeding feedback indication, based on the at least one obtained data element for said at least one meat element and optionally based on the demand for the particular plurality of food processing outcomes, in order to improve at least one genetic parameter of animals to be supplied in future; and
- transmitting the breeding feedback indication to at least one breeding company tasked with supplying animals.

12. The method of any preceding claim, wherein the at least one data element comprises at least one of the following data elements: a mass of said meat element; meat color; at least one geometric dimension of said meat element; an absolute or relative fat content of said meat element; a ratio of fat to lean of said meat element; fat color; marbling score; a fat depth; a provenance remark indicating an origin of said meat element; a veterinary remark indicating a health status or quality of said meat element; a biological age of the animal that supplied said meat element; a processing age of said meat element indicating how long said meat element has been in processing in said meat processing line; an estimated remaining shelf-life of said meat element; a sex of the animal that supplied said meat element; a breed of the animal that supplied said meat element; a type of breeding program of the animal that supplied said meat element; and an area of origin of the animal that supplied said meat element.

13. A computer program comprising instructions which, when the program is executed by a computer, cause the computer to carry out the method of any one of the preceding claims.

14. A data processing apparatus (200) comprising means for carrying out the method of any one of claims 1-12.

15. A computer-readable storage medium comprising instructions which, when executed by a computer, cause the computer to carry out the method of any one of claims 1-12.
